# EUROPÄISCHE PATENTANMELDUNG

(11) **EP 3 388 597 A1**
(43) Veröffentlichungstag der Anmeldung: **17.10.2018**
(21) Anmeldenummer: 17166544.1
(22) Anmeldetag: 13.04.2017
(51) Int. Cl.: E04G 23/02, F16B 13/00, F16B 25/00

(54) **VERSTÄRKUNGSELEMENT ZUM VERSTÄRKEN VON BETONIERTEN PLATTEN**

(71) Anmelder: F.J. Aschwanden AG, 3250 Lyss (CH)
(72) Erfinder: Kenel Lüthold, Albin, 8910 Affoltern am Albis (CH)
(74) Vertreter: BOVARD AG

(57) **Zusammenfassung**

Ein Verstärkungselement (3) zum Verstärken von betonierten Platten (1) insbesondere im Bereich von Stützelementen umfasst ein Halteelement, das mit einem selbstschneidenden Aussengewinde (9) ausgestattet ist. Dieses ist in jeweils eine in der betonierten Platte (1) angebrachten Bohrung (4) einschraubbar und ist mit einer Ankereinrichtung versehbar, welche sich auf der Oberfläche der betonierten Platte (1) abstützt. Das Halteelement ist aus einer Hülse (8) gebildet, welche vollständig in die Bohrung (4) der betonierten Platte (1) einschraubbar ist und sich im eingeschraubten Zustand im Wesentlichen über die gesamte Länge der Bohrung (4) erstreckt. Das Aussengewinde (9) ist über die vollständige Länge der Hülse (8) angebracht. In die Hülse (8) ist ein stangenförmiges Spannelement (10) einsetzbar, welches im eingeschraubten Endbereich der Hülse (8) gehalten ist und am aus der Bohrung (4) vorstehenden Endbereich des Spannelements (10) die Ankereinrichtung aufsetzbar und das Spannelement (10) permanent vorspannbar ist. Dadurch lässt sich die betonierte Platte (1) in optimaler Weise verstärken.

## Beschreibung

Die vorliegende Erfindung bezieht sich auf ein Verstärkungselement zum Verstärken von betonierten Platten insbesondere im Bereich von Stützelementen in Form von Stützen oder Tragwänden, umfassend ein Halteelement, welches mit einem Aussengewinde ausgestattet ist und in jeweils eine in der betonierten Platte angebrachten Bohrung einschraubbar ist, und eine mit dem Halteelement verbindbaren Ankereinrichtung, welche sich mit einer Abstützfläche auf der Oberfläche der betonierten Platte abstützt.

Betonierte Platten, die als Bodenplatten eingesetzt werden, auf welchen Stützelemente zu stehen kommen, oder die als Deckenplatten eingesetzt werden, welche durch Stützelemente abgestützt sind, müssen in den Stützbereichen gezielt durch Bewehrungen oder andere Verstärkungselemente verstärkt werden. Bekannt sind beispielsweise Bewehrungskörbe, die in die zu betonierenden Platten einbetoniert werden, wobei die zu betonierenden Platten in bekannter Weise mit Bewehrungslagen ausgestattet sind. All diese Verstärkungselemente haben zum Ziel, die über die Stützen oder Tragwände auf die betonierte Platte wirkenden Abstützkräfte in möglichst optimaler Weise in die betonierte Platte einleiten zu können. Dadurch werden örtliche Überbelastungen oder sogar ein Durchstanzen der Stützen durch die betonierte Platte vermieden.

Insbesondere bei Instandsetzungen von derartigen Gebäudebereichen ist es oftmals erforderlich, die Bereiche der betonierten Platten, welche die durch die Stützen erzeugten Abstützkräfte aufnehmen müssen, zu verstärken. Hierzu werden beispielsweise in die zu verstärkenden Bereiche der betonierten Platte Bohrungen angebracht, in welche Zuganker eingelegt werden, die in der Bohrung der betonierten Platte fixiert werden, und an deren über die betonierte Platte vorstehenden Enden Ankerköpfe angebracht werden, die auf der jeweiligen Oberfläche der betonierten Platte abgestützt sind. Das Zugelement kann durch die entsprechend ausgestatteten Ankerköpfe gespannt werden, durch diese zusätzlichen Spannkräfte wird die betonierte Platte zusätzlich verstärkt, entstehende Risse, die durch die Stützkräfte auftreten können, werden unterbunden.

Aus der Patentveröffentlichung DE 102011102825 B4 sind derartige Verstärkungselemente bekannt. Diese bestehen jeweils aus einem stabförmigen Element, dessen einer Endbereich mit einem Gewindeabschnitt ausgestattet ist. Dieser Gewindeabschnitt ist mit einem selbstschneidenden Gewinde versehen, mittels welchem das stabförmige Element in eine entsprechend in der betonierten Platte angebrachten Bohrung eingeschraubt werden kann. Der über die betonierte Platte vorstehende Endbereich des stabförmigen Elements ist ebenfalls mit einem Gewinde versehen, auf welche nach dem Auflegen einer Unterlagscheibe eine Spannmutter aufgeschraubt werden kann. Diese Spannmutter wird angezogen, das stabförmige Element wird zwischen dem Gewindeabschnitt, mit welchem das stabförmige Element in der betonierten Platte fixiert ist, und der Spannmutter einer Zugspannung unterworfen. Die betonierte Platte wird dadurch verspannt und somit verstärkt.

Die Krafteinleitung vom stabförmigen Element in die betonierte Platte erfolgt durch diese Lösung lediglich durch das selbstschneidende Gewinde, das am einschraubseitigen Endbereich des stabförmigen Elements angebracht ist, und somit nur über eine geringe Länge der Gesamtlänge des stabförmigen Elements wirksam ist. Die Krafteinleitung ist somit nicht optimal.

Es ist auch bekannt, betonierte Platten im Bereich von Stützelementen mit Verstärkungselementen zu verstärken, die stabförmig ausgebildet sind und eine strukturierte Oberfläche haben können. Diese werden in Bohrungen in der betonierten Platte eingesetzt, wobei die Bohrung einen grösseren Durchmesser aufweist, als das Verstärkungselement. Diese Verstärkungselemente werden in die Bohrung eingeführt, die Verbindung zum Beton der Platte erfolgt beispielsweise über Klebemittel oder eine aushärtbare mörtelartige Masse. Der über die Bohrung vorstehende Bereich ist wiederum mit einem Gewinde ausgestattet, auf welches eine Spannmutter mit Unterlagscheibe aufgeschraubt wird. Auch dadurch kann die betonierte Platte verstärkt werden.

Bei einer derartigen Anwendung besteht das Risiko, dass beispielsweise eine Klebung nicht homogen ist, sodass nicht bestimmt ist, wo und wie die Krafteinleitung des Verstärkungselements auf den umgebenden Beton erfolgt, was nicht optimal ist. Bei einer Klebeverbindung besteht das Risiko, dass der Klebstoff zu Kriechen beginnt, wenn er permanenten Spannkräften ausgesetzt ist. Oftmals ist auch das Verhalten einer derartigen Klebeverbindung in einem Brandfall nicht bekannt, auch eine mörtelartige Masse weist diese Nachteile auf.

Die Aufgabe der vorliegenden Erfindung besteht somit darin, ein Verstärkungselement zum Verstärken von betonierten Platten insbesondere im Bereich von Stützelementen zu schaffen, welches optimal und in einfacher Weise in der jeweiligen Bohrung der betonierten Platte verankerbar ist, und über welches die zu übertragenden Kräfte in optimaler Weise und gleichmässig verteilt aufgenommen und in die betonierte Platte eingeleitet werden können.

Erfindungsgemäss erfolgt die Lösung dieser Aufgabe dadurch, dass das Halteelement aus einer Hülse gebildet ist, welche vollständig in die Bohrung der betonierten Platte einschraubbar ist und sich im eingeschraubten Zustand im Wesentlichen über die gesamte Länge der Bohrung erstreckt, und das Aussengewinde über die vollständige Länge der Hülse angebracht ist, dass in die Hülse ein stangenförmiges Spannelement einsetzbar ist, welches im eingeschraubten Endbereich der Hülse gehalten ist und am aus der Bohrung vorstehenden Endbereich des Spannelements die Ankereinrichtung aufssetzbar und das Spannelement permanent vorspannbar ist.

Durch den Einsatz einer Hülse, die sich im Wesentlichen über die gesamte Länge der Bohrung erstreckt, und die mittels eines Aussengewindes, das sich über die gesamte Länge der Bohrung erstreckt, in die Bohrung eingeschraubt werden kann, wird ein satter Sitz dieser Hülse im Beton erreicht. Bereits diese Hülse allein wirkt für sich als Verstärkungselement im Beton. Das Aussengewinde, das sich über die gesamte Hülsenlänge erstreckt, kann im Falle eines hülsenquerenden Risses im Beton die Rissbreite begrenzen. Mit der freien Ankerlänge des stangenförmigen Spannelements kann infolge dessen Nachgiebigkeit und dessen Dehnfestigkeit eine kontrollierbare Vorspannung erreicht werden. Die auf den eingeschraubten Endbereich der Hülse durch das stangenförmige Spannelement wirkende Kraft wird über die Hülse und deren Aussengewinde, welches sich über die gesamte Länge der Hülse erstreckt, in optimaler Weise in den die Hülse umgebenden Beton eingeleitet, die Einleitung erfolgt über eine grosse Länge der Hülse, wodurch grosse örtliche Spannungsspitzen weitgehend vermieden werden können.

Das dem Aussengewinde der Hülse entsprechende Gewinde in der Bohrung kann durch ein Gewindeschneidelement angebracht werden, wonach die mit dem Aussengewinde versehene Hülse in einfacher Weise in die Bohrung eingeschraubt werden kann.

Das Aussengewinde der Hülse kann aber auch ein selbstschneidendes Gewinde ist. Dadurch kann die Hülse mit dem selbstschneidenden Aussengewinde direkt in die Bohrung, die in der betonierten Platte angebracht ist, eingeschraubt werden, was die Handhabung einfach macht.

In vorteilhafter Weise ist im einschraubseitigen Endbereich der Hülse innenseitig ein Innengewinde angebracht und ist das Spannelement mit einem entsprechenden Gewinde versehen, welches in das Innengewinde einschraubbar ist, wodurch eine optimale Fixierung des Spannelements in der Hülse erreicht werden kann, deren Herstellung sehr einfach ist.

Das Spannelement kann auch mit einem Kopf ausgestattet sein, welches sich auf dem Rand des einschraubseitigen Endbereichs der Hülse abstützt, auch dies ergibt eine optimale Halterung, die einfach hergestellt werden kann.

Dieser Kopf kann durch einen Verankerungsring gebildet sein, welcher auf den mit einem Gewinde versehenen Endbereich des Spannelements aufgeschraubt werden kann, auch diese Lösung ist optimal wirksam und einfach herstellbar.

In vorteilhafter Weise ist das Spannelement eine Gewindestange, wodurch die erforderlichen Gewinde am Spannelement bereits vorhanden sind und nicht speziell hergestellt werden müssen.

Um eine optimale Krafteinleitung von der Ankereinrichtung auf die betonierte Platte erhalten zu können, ist diese aus einer Unterlagscheibe und einer Spannmutter gebildet, welche auf den über die Bohrung vorstehenden Endbereich des Spannelements, das ebenfalls mit einem Gewinde versehen ist, aufsetzbar bzw. aufschraubbar ist. Durch Spannen der Mutter lässt sich in einfacher Weise die gewünschte und permanente Spannung des Spannelements erreichen.

In vorteilhafter Weise verjüngt sich der einschraubseitige Endbereich der Hülse gegen das Ende der Hülse hin, was das Einschrauben der Hülse in die Bohrung in der betonierten Platte vereinfacht.

In vorteilhafter Weise bestehen die Hülse, das Spannelement und die Ankereinrichtung aus einem korrosionsfesten Material, wodurch diese vor Korrosion geschützt sind.

Um ein einfaches Einschrauben der Hülse in das Bohrloch der betonierten Platten zu erleichtern, ist der dem einschraubseitigen Endbereich gegenüberliegende Endbereich der Hülse mit einer Aufnahme für ein Werkzeug ausgestaltet.

In vorteilhafter Weise ist zwischen der Abstützfläche der Ankereinrichtung, welche sich auf der Oberfläche der betonierten Platte abstützt, und dem benachbarten Endbereich der Hülse ein Zwischenraum vorgesehen. Dadurch wird erreicht, dass die Spannkräfte in optimaler Weise vom Verstärkungselement in den Beton der betonierten Platte eingeleitet werden kann und somit eine optimale Verstärkung erreicht wird.

Ausführungsformen der Erfindung werden nachfolgend an Hand er beiliegenden Zeichnung beispielhaft näher erläutert.

Es zeigt
Fig. 1 in räumlicher Darstellung zum Teil im Schnitt eine auf einer Stütze aufliegenden betonierten Platte, in welche die Verstärkungselemente eingesetzt sind;
Fig.2 eine Ansicht auf die betonierte Platte und die Stütze gemäss Fig. 1, zum Teil im Schnitt, mit den eingesetzten Verstärkungselementen;
Fig. 3 eine Ansicht auf eine erste Ausführungsform eines erfindungsgemässen Verstärkungselementes;
Fig. 4 eine räumliche Darstellung des Verstärkungselementes gemäss Fig. 3;
Fig. 5 eine Schnittdarstellung des Verstärkungselementes gemäss Fig. 4;
Fig. 6 eine andere Ansicht einer räumlichen Darstellung des Verstärkungselementes gemäss Fig. 4;
Fig. 7 eine Schnittdarstellung des in den Fig. 3 - 6 dargestellten Verstärkungselementes, im in eine Bohrung einer betonierten Platte eingesetzten Zustand;
Fig. 8 eine vergrösserte Darstellung des Endbereichs des Verstärkungselementes gemäss Fig. 7, der in die Bohrung der betonierten Platte eingeschraubt ist;
Fig. 9 in räumlicher Darstellung eine Aufnahme in der Hülse für ein Werkzeug zum Einschrauben der Hülse in das Bohrloch;
Fig. 10 eine Ansicht auf eine weitere Ausführungsform eines Verstärkungselementes;
Fig. 11 eine Schnittdarstellung entlang Linie XI-XI des Verstärkungselementes gemäss Fig. 10;
Fig. 12 eine Ansicht auf eine weitere Ausführungsform eines Verstärkungselementes; und
Fig. 13 eine Schnittdarstellung entlang Linie XIII-XIII durch das Verstärkungselement gemäss Fig. 12.

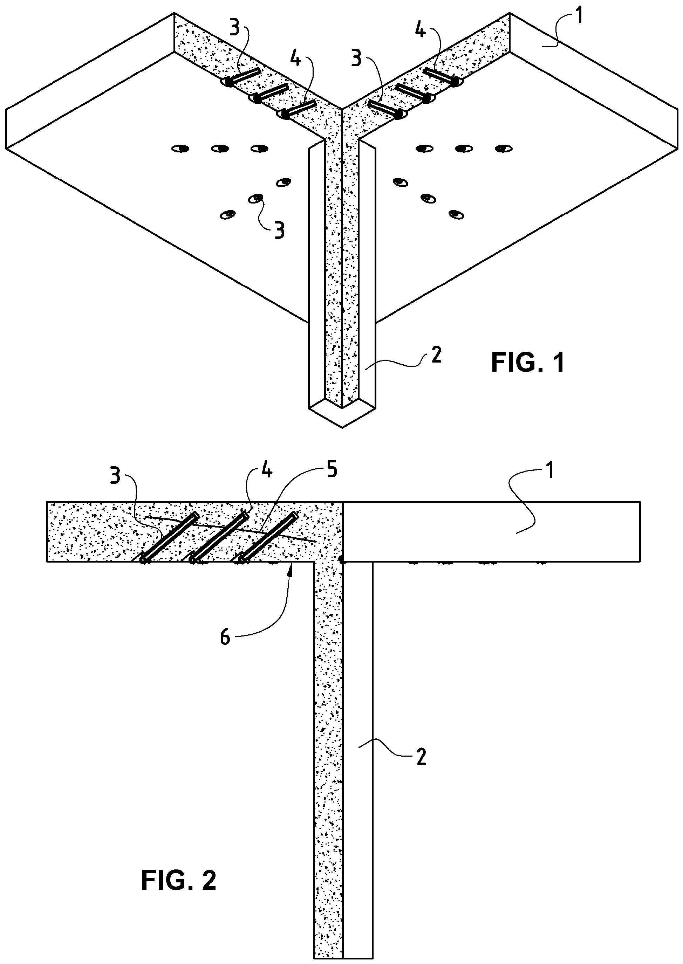

Aus Fig. 1 ist eine betonierte Platte 1 ersichtlich, welche in bekannter Weise auf einem Stützelement 2 abgestützt ist. In bekannter, nicht dargestellter Weise ist die betonierte Platte 1 mit Bewehrungslagen versehen, im Bereich des Stützelementes 2 ist zusätzlich beispielsweise ein bekannter Bewehrungskorb eingesetzt. Zur zusätzlichen Verstärkung der betonierten Platte 1 im Bereich des Stützelementes 2 sind in diese Verstärkungselemente 3 eingesetzt, die später noch im Detail beschrieben werden. Diese Verstärkungselemente 3 werden um das Stützelement 2 herum in die betonierte Platte angebrachte Bohrungen 4 eingesetzt und verspannt. Die Anordnung der Verstärkungselemente 3 in den Bohrungen 4 rund um das Stützelement 2 in der betonierten Platte 1 sind vom gewünschten Resultat abhängig, ebenfalls die Anzahl der eingesetzten Verstärkungselemente 3.

Fig. 2 zeigt wiederum die betonierte Platte 1, die auf dem Stützelement 2 abgestützt ist. Durch die Stützkräfte des Stützelementes 2, die auf die betonierte Platte 1 übertragen werden, entstehen unter anderen auf die betonierte Platte wirkende Durchstanzkräfte. Diese Durchstanzkräfte können zu Rissbildungen in der betonierten Platte 1 führen, in Fig. 2 ist in der betonierten Platte 1 symbolisch ein derartiger Riss 5 angedeutet. Um diese betonierte Platte 1 zu verstärken, werden, wie vorgängig bereits erwähnt worden ist, Verstärkungselemente 3 eingesetzt. Im hier dargestellten Beispiel sind diese Verstärkungselemente 3 mit einer Neigung in die betonierte Platte 1 eingesetzt worden, der Neigungswinkel zwischen Verstärkungselement 3 und der Oberfläche 6 der betonierten Platte 1 beträgt beispielsweise 45° bis 75°, wodurch eine optimale Wirkung zur Aufnahme der Durchstanzkräfte erreicht wird. Selbstverständlich können bei anderen auftretenden Kräften die Verstärkungselemente beispielsweise auch senkrecht zur Oberfläche 6 der betonierten Platte 1 ausgerichtet sein.

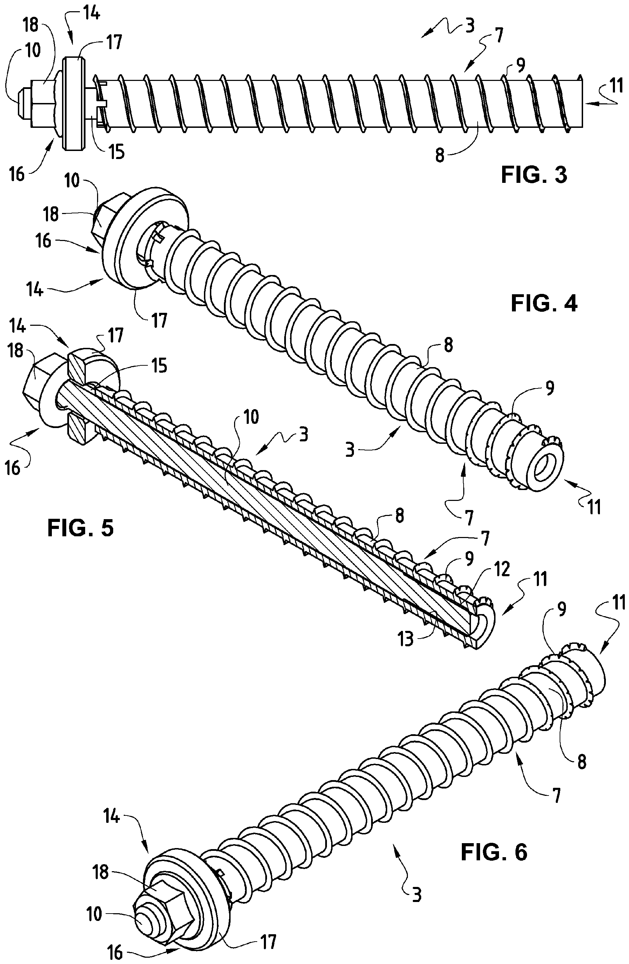

In den Fig. 3 - 6 ist eine erste Ausführungsform eines erfindungsgemässen Verstärkungselementes 3 dargestellt. Dieses Verstärkungselement 3 umfasst ein Halteelement 7, das als Hülse 8 ausgebildet ist. Aussenseitig an der Hülse 8 ist ein über die gesamte Länge sich erstreckendes Gewinde 9 angebracht. In die Hülse 8 eingesetzt ist ein stangenförmiges Spannelement 10, die Hülse 8 ist im einschraubseitigen Endbereich 11 innenseitig mit einem Innengewinde 12 versehen. Das stangenförmige Spannelement 10 ist mit einem entsprechenden Gewinde 13 ausgestattet, das stangenförmige Spannelement 10 ist somit in das Innengewinde 12 in der Hülse 8 einschraubbar.

Der über die Hülse 8 vorstehende Endbereich 14 des stangenförmigen Spannelementes 10 ist ebenfalls mit einem Gewinde 15 versehen. Auf dieses Gewinde 15 aufsetzbar ist eine Ankereinrichtung 16, welche im hier dargestellten Ausführungsbeispiel aus einer Unterlagscheibe 17 und einer Spannmutter 18 gebildet ist. Selbstverständlich wären auch anders ausgebildete Ankereinrichtungen 16 denkbar.

Bei dieser Ausführungsform eines Verstärkungselementes kann das stangenförmige Spannelement 10 in einfacher Weise eine Gewindestange sein, die auf die entsprechende Länge abgelängt ist.

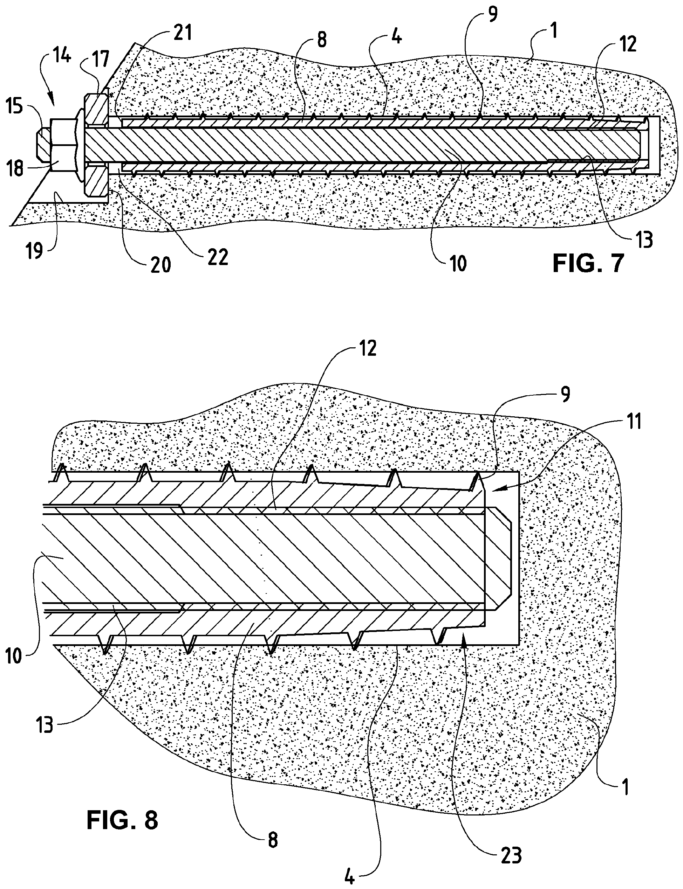

Wie aus Fig. 7 ersichtlich ist, wird in der zu verstärkenden betonierten Platte 1 eine Bohrung 4 angebracht. In diese Bohrung 4 wird die Hülse 8 eingeschraubt, die im hier dargestellten Ausführungsbeispiel als selbstschneidendes Gewinde 9 ausgebildet ist. Hierbei dringt das selbstschneidende Gewinde 9 in den Beton in der Bohrung 4 ein. In die Hülse 8 wird das stangenförmige Spannelement 10 eingeführt, hierbei wird dieses stangenförmige Spannelement 10 mit dem Gewinde 13 in das Innengewinde 12 in der Hülse eingeschraubt. Dieses Innengewinde 12 weist vorteilhafterweise eine Länge auf, die etwa dem 1,5-fachen Nenndurchmessers des Spannelements 10 entspricht. Auf den vorstehenden Endbereich 14 des stangenförmigen Spannelementes 10 wird die Unterlagscheibe 17 aufgelegt, auf das Gewinde 15 des stangenförmigen Spannelements 10 wird dann die Spannmutter 18 aufgeschraubt.

Der Eingangsbereich der Bohrung 4 in die betonierte Platte 1 wird an die winklige Lage des Verstärkungselementes angepasst. Hierzu wird eine Ausnehmung 19 angebracht, derart, dass die Unterlagscheibe 17 senkrecht zum stangenförmigen Spannelement 10 ausgerichtet ist, wenn sie sich auf dieser derart gebildeten Abstützfläche 20 abstützt.

Die in die Bohrung 4 eingeschraubte Hülse 8 erstreckt sich praktisch über die gesamte Länge dieser Bohrung 4. Zwischen der Abstützfläche 20, auf welcher sich die Unterlagscheibe 17 abstützt, und dem benachbarten Endbereich 21 der Hülse ist immer ein Zwischenraum 22 vorgesehen. Wenn die Spannmutter 18 gespannt wird, stützt sich somit die Unterlagscheibe 17 ausschliesslich auf der in der betonierten Platte 1 liegenden Abstützfläche 20 ab, ohne mit der Hülse 8 in Kontakt zu kommen, die Spannkraft wirkt über das Gewinde 13 auf das Innengewinde 12 der Hülse 8 und wird in diesem Bereich auf die Hülse 8 übertragen. Die Hülse 8 ist über ihre gesamte Länge mittels des selbstschneidenden Gewindes 9 satt in der Bohrung 4 der betonierten Platte 1 gehalten, die Kraft wird somit über einen grossen Bereich von der Hülse 8 und dem selbstschneidenden Gewinde 9 optimal in den Beton der betonierten Platte 1 eingeleitet.

Aus Fig. 8 ist ersichtlich, dass es vorteilhaft ist, den einschraubseitigen Endbereich 11 der Hülse 8, wenn diese mit einem selbstschneidende Gewinde 9 versehen ist, so auszugestalten, dass dieser gegen das Ende der Hülse 8 hin mit einer Verjüngung 23 versehen ist. Dies hat den Vorteil, dass das selbstschneidende Gewinde 9 der Hülse 8 beim Einführen in die Bohrung 4 und beim Einschrauben in die Bohrung 4 ohne weiteres Griff im Beton kriegt und dadurch leichter in die Bohrung 4 eingeschraubt werden kann. Das Spannelement 10 kann im in die Hülse eingeschraubten Zustand über den einschraubseitigen Endbereich 11 der Hülse 8 vorstehend sein, er sollte aber auf den Grund der Bohrung 4 und somit auf den Beton der betonierten Platte 1 keinen Druck ausüben.

Wie bereits erwähnt wurde, kann das Aussengewinde 9 der Hülse 8 ein selbstschneidendes Gewinde sein, wodurch die Hülse 8 direkt in eine in der betonierten Platte 1 angebrachte Bohrung 4 eingeschraubt werden kann. Es können aber auch Hülsen 8 verwendet werden, deren Aussengewinde 9 nicht selbstschneidend ausgebildet sind, um eine derartige Hülse 8 in eine entsprechende Bohrung 4 einzubringen, kann in die Bohrung 4 mittels eines Gewindeschneidelements ein entsprechendes Gewinde geschnitten werden, die Hülse 8 mit dem Aussengewinde 9 kann dann in die derart vorbereitete Bohrung 4 eingeschraubt werden, die Hülse 8 und das Aussengewinde 9 werden hierdurch nicht so stark beansprucht, wie eine mit einem selbstschneidenden Ausengewinde versehenen Hülse. Der Sitz der Hülse 8 im Beton ist aber bei beiden Anwendungen praktisch identisch.

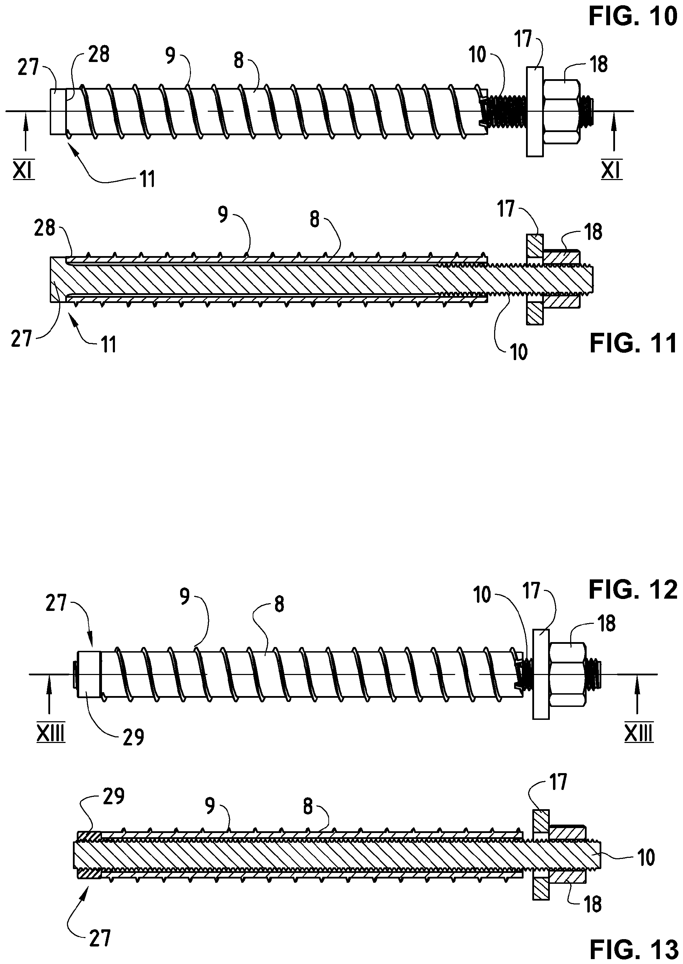

Das Gewindeschneidelement kann nach dem Schneiden des Gewindes in der Bohrung 4 im Beton wieder herausgedreht und weiter verwendet werden. Es ist aber auch denkbar, dass das Gewindeschneidelement so ausgebildet ist, dass es nach dem Gewindeschneidvorgang in der Bohrung 4 belassen wird. In die Bohrung 4 wird dann die Hülse 8 eingeschraubt, bis sie am Gewindeschneidelement ansteht. Das Gewindeschneidelement könnte dann als Kopf für das Spannelement dienen, wie dies den Fig. 12 und 13 entnommen werden kann, die später noch beschrieben werden. Das Gewindeschneidelement müsste dann nur noch mit einem Innengewinde versehen sein, in welches das Spannelement 10 mit dem entsprechenden Gewinde eingeschraubt werden könnte.

Die Hülse 8, das Spannelement 10 und die Ankereinrichtung können aus einem korrosionsfesten Material gebildet sein, beispielsweise einem vergüteten Stahl. Die Festigkeit dieses Materials soll so sein, dass die auftretenden Kräfte ohne weiteres aufgenommen und übertragen werden können.

Das stangenförmige Spannelement 10 eines Verstärkungselementes 3 kann beispielsweise einen Durchmesser von 12 mm haben. Auf diesem werden M12-Gewinde angebracht. Der Schaftdurchmesser der Hülse 8 ist hierbei 17,7 mm. Der Aussendurchmesser der Hülse 8 mit dem Gewinde 9 beträgt 20 mm. Der Durchmesser der Bohrung 4, welche in die betonierte Platte eingebracht wird, beträgt 18 mm. Die auf das stangenförmige Spannelement 10 aufsetzbare Unterlagscheibe 17 weist eine Dicke von 12 mm und einen Aussendurchmesser von 52 mm auf. Dadurch werden optimale Verhältnisse geschaffen. Selbstverständlich können in geeigneter Weise je nach Dimension des Bauwerks auch andere, beispielsweise grössere Abmessungen aufweisende Hülsen eingesetzt werden, die entsprechenden Masse könnten entsprechend angepasst werden.

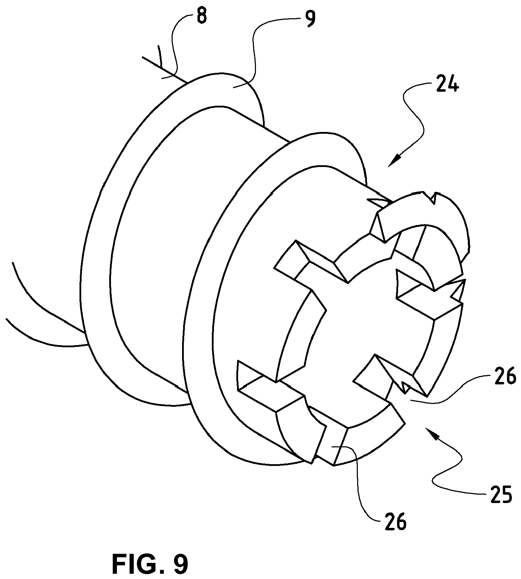

Aus Fig. 9 ist der dem einschraubseitigen Endbereich 11 gegenüberliegende Endbereich 24 der Hülse 8 mit dem Gewinde 9 dargestellt. Dieser Endbereich 24 ist mit einer Aufnahme 25 für ein entsprechend ausgebildetes Werkzeug ausgestattet, mittels welchem die Hülse 8 in das jeweilige Bohrloch eingeschraubt werden kann. Im hier dargestellten Ausführungsbeispiel besteht diese Aufnahme 25 aus radial in der Hülse 8 angeordneten Schlitzen 26, in welche das entsprechend ausgebildete Werkzeug in einfacher Weise eingesteckt werden kann. Selbstverständlich sind auch andere geeignete Ausgestaltungen dieser Aufnahme 25 und des entsprechenden Werkzeugs denkbar.

In den Fig. 10 und 11 ist eine weitere Ausführungsform eines erfindungsgemässen Verstärkungselementes 3 dargestellt. Dieses Verstärkungselement 3 ist identisch aufgebaut, wie die vorgängig beschriebene Ausführungsform, umfassend eine Hülse 8, ein stabförmiges Spannelement 10, Unterlagscheibe 17 und Spannmutter 18, das stabförmige Spannelement 10 weist lediglich im einschraubseitigen Endbereich 11 einen Kopf 27 auf, der sich auf dem Rand 28 des einschraubseitigen Endbereichs 11 der Hülse 8 abstützt. Bevor die Hülse 8 in die Bohrung der betonierten Platte eingeschraubt wird, muss somit das stabförmige Spannelement 10 in die Hülse 8 eingeführt werden.

Die Fig. 12 und 13 zeigen noch eine weitere Ausführungsform des erfindungsgemässen Verstärkungselementes 3, der Unterschied zur vorgängig beschriebenen Ausführungsform zu Fig. 10 und 11 besteht lediglich darin, dass der Kopf 27 als Verankerungsring 29 mit einem Innengewinde ausgebildet ist, der auf das stangenförmige Spannelement 10 aufgeschraubt ist.

Mit diesem erfindungsgemässen Verstärkungselement wird erreicht, dass eine betonierte Platte im Bereich von Stützelementen in optimaler Weise verstärkt werden kann, die Krafteinleitung und -verteilung wird optimal, zudem ist das Verstärkungselement einfach herstellbar, es ist auch einfach in die betonierte Platte einzusetzen.

## Patentansprüche

1. Verstärkungselement (3) zum Verstärken von betonierten Platten (1) insbesondere im Bereich von Stützelementen (2) in Form von Stützen oder Tragwänden, umfassend ein Halteelement (7), welches mit einem Aussengewinde (9) ausgestattet ist und in jeweils eine in der betonierten Platte (1) angebrachten Bohrung (4) einschraubbar ist, und eine mit dem Halteelement (7) verbindbaren Ankereinrichtung (16), welche sich mit einer Abstützfläche (20) auf der Oberfläche (6) der betonierten Platte (1) abstützt, **dadurch gekennzeichnet, dass** das Halteelement (7) aus einer Hülse (8) gebildet ist, welche vollständig in die Bohrung (4) der betonierten Platte (1) einschraubbar ist und sich im eingeschraubten Zustand im Wesentlichen über die gesamte Länge der Bohrung (4) erstreckt, und das Aussengewinde (9) über die vollständige Länge der Hülse (8) angebracht ist, dass in die Hülse (8) ein stangenförmiges Spannelement (10) einsetzbar ist, welches im eingeschraubten Endbereich (11) der Hülse (8) gehalten ist und am aus der Bohrung (4) vorstehenden Endbereich (14) des Spannelements (10) die Ankereinrichtung (16) aufsetzbar und das Spannelement (10) permanent vorspannbar ist.

2. Verstärkungselement nach Anspruch 1, **dadurch gekennzeichnet, dass** das dem Aussengewinde (9) der Hülse (8) entsprechende Gewinde in der Bohrung (4) durch ein Gewindeschneidelement anbringbar ist.

3. Verstärkungselement (3) nach Anspruch 1, **dadurch gekennzeichnet, dass** das Aussengewinde (9) der Hülse (8) ein selbstschneidendes Gewinde ist.

4. Verstärkungselement (3) nach einem der Ansprüche 1 bis 3, **dadurch gekennzeichnet, dass** im einschraubseitigen Endbereich (11) der Hülse (8) innenseitig ein Innengewinde (12) angebracht ist und das Spannelement (10) mit einem entsprechenden Gewinde (13) versehen ist, welches in das Innengewinde (12) einschraubbar ist.

5. Verstärkungselement (3) nach einem der Ansprüche 1 bis 3, **dadurch gekennzeichnet, dass** das Spannelement (10) mit einem Kopf (27) ausgestattet ist, welcher sich auf dem Rand (28) des einschraubseitigen Endbereichs (11) der Hülse (8) abstützt.

6. Verstärkungselement (3) nach Anspruch 5, **dadurch gekennzeichnet, dass** der Kopf (27) durch einen Verankerungsring (29) gebildet ist, welcher auf das mit einem Gewinde versehenen Endbereich des Spannelements (10) aufschraubbar ist.

7. Verstärkungselement (3) nach einem der Ansprüche 1 bis 6, **dadurch gekennzeichnet, dass** das Spannelement (10) eine Gewindestange ist.

8. Verstärkungselement (3) nach einem der Ansprüche 1 bis 7, **dadurch gekennzeichnet, dass** die Ankereinrichtung (16) aus einer Unterlagscheibe (17) und einer Spannmutter (18) gebildet ist, welche auf den über die Bohrung (4) vorstehenden Endbereich (14) des Spannelements (10), das ebenfalls mit einem Gewinde (15) versehen ist, aufsetzbar bzw. aufschraubbar ist.

9. Verstärkungselement (3) nach einem der Ansprüche 3 bis 8, **dadurch gekennzeichnet, dass** der einschraubseitige Endbereich (11) der Hülse (8) sich gegen das Ende der Hülse (8) hin verjüngt.

10. Verstärkungselement (3) nach einem der Ansprüche 1 bis 9, **dadurch gekennzeichnet, dass** die Hülse (8), das Spannelement (10) und die Ankereinrichtung (16) aus einem korrosionsfesten Material bestehen.

11. Verstärkungselement (3) nach einem der Ansprüche 1 bis 10, **dadurch gekennzeichnet, dass** der dem einschraubseitigen Endbereich (11) gegenüberliegende Endbereich (24) der Hülse (8) mit einer Aufnahme (25) für ein Werkzeug zum Einschrauben der Hülse (8) in das Bohrloch (4) ausgestaltet ist.

12. Verstärkungselement (3) nach einem der Ansprüche 1 bis 9, **dadurch gekennzeichnet, dass** zwischen der Abstützfläche (20) der Ankereinrichtung (16), welche sich auf der Oberfläche (6) der betonierten Platte (1) abstützt, und dem benachbarten Endbereich (21) der Hülse (8) ein Zwischenraum (22) vorgesehen ist.
